(19) **Europäisches Patentamt**
**European Patent Office**
**Office européen des brevets**

(11) **EP 4 769 868 A1**

(12) **EUROPEAN PATENT APPLICATION**

(43) Date of publication:
**01.07.2026 Bulletin 2026/27**

(51) International Patent Classification (IPC):
*H02J 3/38* (2026.01)  *H02J 1/102* (2026.01)
*H02J 3/11* (2026.01)  *H02J 3/12* (2026.01)

(21) Application number: **25225687.0**

(22) Date of filing: **19.12.2025**

(52) Cooperative Patent Classification (CPC):
**H02J 3/381; H02J 1/102; H02J 3/11; H02J 3/12;**
H02J 2101/24; H02J 2101/25

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 US 202463739774 P**

(71) Applicant: **DELTA ELECTRONICS, INC.
11491 Taipei (TW)**

(72) Inventors:
• **Wen, Bo
Morrisville, NC, 27560 (US)**
• **Barbosa, Peter Mantovanelli
320023 Taoyuan City (TW)**
• **Chang, Chien-Chung
320023 Taoyuan City (TW)**

(74) Representative: **Uexküll & Stolberg
Partnerschaft von
Patent- und Rechtsanwälten mbB
Beselerstraße 4
22607 Hamburg (DE)**

(54) **POWER MANAGEMENT SYSTEM FOR STRING SOLAR INVERTER**

(57) A system includes a maximum power point (MPP) tracker (101) coupled between a first solar panel string (112) and a DC voltage bus (Vdc), wherein the MPP tracker (101) includes a first DC/DC converter (114) and is configured to perform a maximum power point tracking (MPPT) control scheme on the first DC/DC converter (114), a power reservoir (102) coupled between a second solar panel string (122) and the DC voltage bus (Vdc), wherein the power reservoir (102) includes a second DC/DC converter (124), and an inverter (154) coupled between the DC voltage bus (Vdc) and a power grid (154), wherein the inverter is configured to operate in multiple modes including a grid-forming (GFM) mode and a grid-following (GFL) mode, and wherein in the GFM mode, the second DC/DC converter (124) is configured to regulate a voltage on the DC voltage bus (Vdc).

Figure 2

# Description

TECHNICAL FIELD

Embodiments of the disclosure relate to photovoltaic (PV) energy conversion systems, and more particularly to power management and control methods for string solar inverters capable of providing grid-forming (GFM) functions.

BACKGROUND

As renewable energy penetration continues to increase worldwide, electrical power systems face new stability challenges. Traditional power grids rely heavily on synchronous generators, whose rotating masses inherently provide inertia and damping to help maintain grid frequency stability. However, inverter-based renewable energy sources such as solar PV systems typically operate using grid-following (GFL) control, in which the inverter behaves as a current source synchronized to the grid through a phase-locked loop (PLL). GFL inverters do not establish grid voltage or frequency and do not contribute meaningful inertia because their internal energy storage is minimal and their control mechanisms are not designed to emulate the behavior of synchronous generators.

Recent efforts have focused on grid-forming (GFM) inverter technology, which enables an inverter to behave as a voltage source capable of setting grid voltage and frequency, supporting islanded operation, and providing synthetic inertia and damping. GFM inverters can provide critical stabilizing services, including frequency response and black-start capability. These capabilities have been successfully applied in battery-energy-storage systems, where substantial energy is available on the dc side of the inverter. However, traditional solar inverters cannot readily implement GFM control because they normally operate each solar string at its maximum power point (MPP), leaving no power margin to supply inertia.

Two approaches have been proposed to enable solar inverters to provide grid-forming capabilities: (1) adding dedicated energy storage on the dc side of the inverter, or (2) operating the PV strings away from their MPP so that headroom is available when grid support is required. The first solution increases system cost and complexity, while the second requires careful coordination of the DC/DC conversion stage to ensure that sufficient reserve power is available without compromising overall system performance.

In conventional inverter architectures, the DC bus is regulated by the inverter, while each DC/DC converter independently executes a maximum power point tracking (MPPT) algorithm. Under GFM operation, however, such arrangements can result in DC bus instability because the power flowing into the DC bus and the power flowing out are governed by unrelated control objectives. Without direct coordination, the DC bus can experience undesirable voltage excursions, limiting the feasibility of GFM operation in PV energy conversion systems. Accordingly, there is a need for an improved power management architecture for string solar inverters that enables stable grid-forming control without adding external energy storage. The present disclosure addresses this need.

SUMMARY

These and other problems are generally solved or circumvented, and technical advantages are generally achieved, by preferred embodiments of the present disclosure which provide power management and control methods for string solar inverters.

In accordance with an embodiment, a system includes a maximum power point (MPP) tracker coupled between a first solar panel string and a DC voltage bus, wherein the MPP tracker includes a first DC/DC converter and is configured to perform a maximum power point tracking (MPPT) control scheme on the first DC/DC converter, a power reservoir coupled between a second solar panel string and the DC voltage bus, wherein the power reservoir includes a second DC/DC converter, and an inverter coupled between the DC voltage bus and a power grid, wherein the inverter is configured to operate in multiple modes including a grid-forming (GFM) mode and a grid-following (GFL) mode, and wherein in the GFM mode, the second DC/DC converter is configured to regulate a voltage on the DC voltage bus.

In accordance with another embodiment, a method includes configuring a maximum power point (MPP) tracker to perform a maximum power point tracking (MPPT) control scheme on a first DC/DC converter, wherein the first DC/DC converter is coupled between a first solar panel string and a DC voltage bus in a string inverter power system, configuring an inverter to operate in multiple modes including a grid-forming (GFM) mode and a grid-following (GFL) mode, wherein the inverter is coupled between the DC voltage bus and a power grid, and configuring a second DC/DC converter in a power reservoir to regulate a voltage on the DC voltage bus when the inverter is configured to operate in the GFM mode, and configuring the inverter to regulate the voltage on the DC voltage bus when the inverter is configured to operate in the GFL mode, wherein the second DC/DC converter is coupled between a second solar panel string and the DC voltage bus.

In accordance with yet another embodiment, a system includes N DC/DC converters respectively coupled between N solar panel strings and a DC voltage bus, an inverter coupled between the DC voltage bus and a power grid, the inverter being configured to operate in multiple modes including a grid-forming (GFM) mode and a grid-following (GFL) mode, and a control circuit configured to designate one of the N DC/DC converters as a maximum power point (MPP) tracker and operate the designated DC/DC converter according to a maximum power point tracking (MPPT) control scheme, and operate the remaining ones of the N DC/DC converters as power reservoir converters, wherein in the GFM mode, the power reservoir converters are configured to regulate a voltage on the DC voltage bus.

The foregoing has outlined rather broadly the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

BRIEF DESCRIPTION OF THE DRAWINGS

For a more complete understanding of the present disclosure, and the advantages thereof, reference is now made to the following descriptions taken in conjunction with the accompanying drawings, in which:

Figure 1 illustrates a block diagram of a string inverter power system in accordance with various embodiments of the present disclosure;

Figure 2 illustrates a schematic diagram of a first implementation of the string inverter power system shown in Figure 1 in accordance with various embodiments of the present disclosure;

Figure 3 illustrates a control block diagram of the string inverter power system shown in Figure 2 operating in the GFM mode in accordance with various embodiments of the present disclosure;

Figure 4 illustrates a control block diagram of the string inverter power system shown in Figure 2 operating in the GFL mode in accordance with various embodiments of the present disclosure;

Figure 5 illustrates a schematic diagram of a second implementation of the string inverter power system shown in Figure 1 in accordance with various embodiments of the present disclosure;

Figure 6 illustrates a control block diagram of the string inverter power system shown in Figure 5 in accordance with various embodiments of the present disclosure;

Figure 7 illustrates a flow chart of a control method for starting up the string inverter power system shown in Figure 1 in accordance with various embodiments of the present disclosure; and

Figure 8 illustrates a flow chart of a control method for operating the string inverter power system shown in Figure 1 in accordance with various embodiments of the present disclosure.

Corresponding numerals and symbols in the different figures generally refer to corresponding parts unless otherwise indicated. The figures are drawn to clearly illustrate the relevant aspects of the various embodiments and are not necessarily drawn to scale.

DETAILED DESCRIPTION OF ILLUSTRATIVE EMBODIMENTS

The making and using of the presently preferred embodiments are discussed in detail below. It should be appreciated, however, that the present disclosure provides many applicable inventive concepts that can be embodied in a wide variety of specific contexts. The specific embodiments discussed are merely illustrative of specific ways to make and use the disclosure, and do not limit the scope of the disclosure.

The present disclosure will be described with respect to preferred embodiments in a specific context, namely power management and control methods for string solar inverters capable of providing grid-forming (GFM) functions. The disclosure may also be applied, however, to a variety of power conversion systems. Hereinafter, various embodiments will be explained in detail with reference to the accompanying drawings.

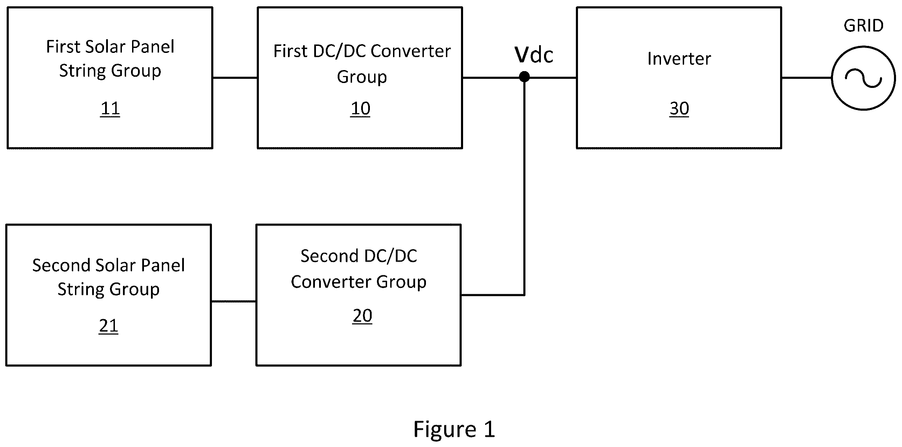

Figure 1 illustrates a block diagram of a string inverter power system in accordance with various embodiments of the present disclosure. The string inverter power system includes a plurality of solar panel strings that are divided into two functional groups, namely a first solar panel string group 11 and a second solar panel string group 21. The string inverter power system further includes N DC/DC converters that are divided into two functional groups. A first DC/DC converter group 10 includes M DC/DC converters, where each converter of the first DC/DC converter group 10 is connected to a corresponding solar panel string of the first solar panel string group 11. A second DC/DC converter group 20 includes the remaining (N-M) DC/DC converters, each of which is connected to a corresponding solar panel string of the second solar panel string group 21.

In the illustrated embodiment, the first DC/DC converter group 10 is coupled between the first solar panel string group 11 and a DC voltage bus Vdc, and the second DC/DC converter group 20 is coupled between the second solar panel string group 21 and the DC voltage bus Vdc. An inverter 30 is further coupled between the DC voltage bus Vdc and an external power grid. The inverter 30 converts the voltage on the DC voltage bus into an AC output and operates in multiple modes including a grid-forming (GFM) mode and a grid-following (GFL) mode, as described in greater detail below. The DC/DC converters of the first and second DC/DC converter groups 10, 20 collectively manage the power extraction from the solar panel strings and the regulation of the voltage on the DC voltage bus.

During a startup process of the string inverter power system of Figure 1, all DC/DC converters of the first DC/DC converter group 10 and the second DC/DC converter group 20 initially operate in a DC bus regulation mode to establish the voltage on the DC voltage bus at a predetermined rated value. A pre-charge operation is first performed to charge the DC bus capacitor to a safe level, followed by a soft-start process in which the voltage on the DC voltage bus is gradually increased to its rated operating voltage. After the voltage on the DC voltage bus is stabilized, the inverter 30 enters a pre-synchronization mode in which the voltage on the output filter capacitor of the inverter 30 is aligned with the grid voltage. The inverter 30 then closes its AC side breaker to enter the grid-forming mode. Once the inverter 30 is operating stably, one of the N DC/DC converters (typically one of the DC/DC converters in the first DC/DC converter group 10) is designated as the maximum power point (MPP) tracker to begin MPPT ramp-up, while the remaining DC/DC converters continue regulating the voltage on the DC voltage bus as a power reservoir. No power reserve is available during the MPPT ramp-up interval.

After completion of the startup process, the inverter 30 operates in either the GFM mode or the GFL mode depending on the relationship between the grid power demand and the maximum available power from the DC/DC converters. In particular, the inverter 30 is configured to operate in the GFM mode when an output power demand of the string inverter power system is less than or equal to an available power output that the string inverter power system is able to provide under the MPPT control scheme. On the other hand, the inverter 30 is configured to operate in the GFL mode when an output power demand of the string inverter power system is greater than the available power output that the string inverter power system is able to provide under the MPPT control scheme.

In the GFM mode, the inverter 30 functions as a voltage source that establishes and maintains the grid voltage and frequency, and the DC/DC converters in the second DC/DC converter group 20 regulate the voltage on the DC voltage bus while operating their corresponding solar panel strings at voltages above their maximum power point voltages to maintain a power reserve. The power reserve ($\Delta P$) represents the additional active power the string inverter power system can provide above its current operating point. In particular, the power reserve ($\Delta P$) represents the additional active power that can be delivered by reducing the operating voltages of the solar panel strings of the second solar panel string group 21 toward their respective maximum power points.

In operation, when the grid experiences a frequency drop or requires additional active power, the inverter 30 releases the required additional power by releasing the power reserve, during which the DC/DC converters in the second DC/DC converter group 20 decrease the operating voltages of their associated solar panel strings toward their respective MPP voltages to extract additional power. If the grid power demand exceeds the maximum deliverable power from the DC/DC converters of the DC/DC converter groups 10, 20, defined by the MPPT power limit, the inverter 30 transitions from the GFM mode to the GFL mode in which the inverter 30 behaves as a current source synchronized to the grid voltage and regulates the voltage on the DC voltage bus while delivering the maximum available power from all solar panel strings. Thus, the coordinated GFM/GFL operation and the controlled utilization of power reserve enable the inverter 30 to provide inertial response, frequency support, and stable power delivery under varying grid conditions.

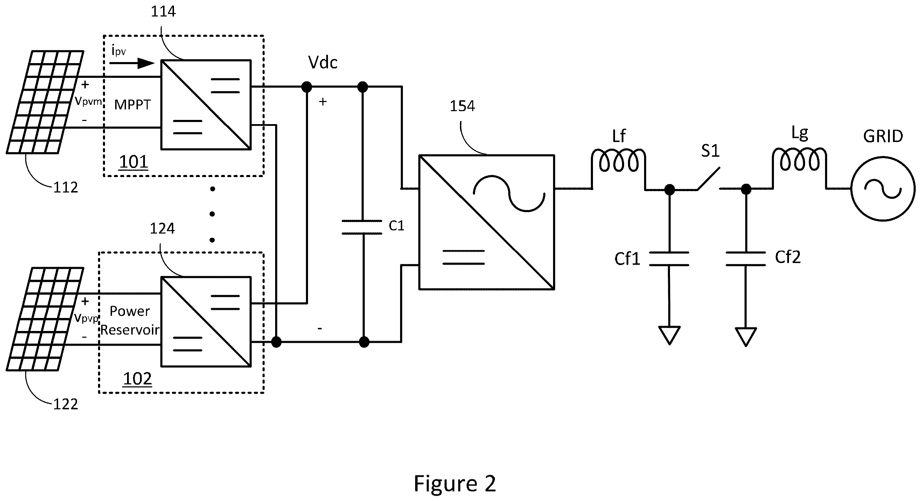

Figure 2 illustrates a schematic diagram of a first implementation of the string inverter power system shown in Figure 1 in accordance with various embodiments of the present disclosure. As shown in Figure 2, the string inverter power system includes an MPP tracker 101, a power reservoir 102, a capacitor C1, an inverter 154, a first filter formed by an inductor Lf and a capacitor Cf1, a breaker S1, and a second filter formed by a capacitor Cf2 and an inductor Lg.

The MPP tracker 101 includes a first DC/DC converter 114 and associated control circuits (not shown). The first DC/DC converter 114 is coupled between a first solar panel string 112 and the DC voltage bus Vdc. The first solar panel string 112 provides power to the first DC/DC converter 114, which is configured to operate under the MPPT control scheme. The power reservoir 102 includes a second DC/DC converter 124 and associated control circuits (not shown). The second DC/DC converter 124 is coupled between a second solar panel string 122 and the DC voltage bus Vdc. The second solar panel string 122 provides power to the second DC/DC converter 124, and the second DC/DC converter 124 is configured to regulate the voltage on the DC voltage bus.

In practice, a string inverter power system may include a plurality of solar panel strings and DC/DC converters. Depending on application requirements and design needs, the string inverter power system may include additional MPP trackers, each including a DC/DC converter, and may also include additional power reservoirs constructed in the same manner. For clarity in illustrating the innovative aspects of the present disclosure, Figure 2 depicts an embodiment having only a single MPP tracker and a single power reservoir. A person of ordinary skill in the art would recognize that the operating principles described herein apply equally to systems having any suitable number of MPP trackers and power reservoirs.

As shown in Figure 2, the capacitor C1 is connected between the inputs of the inverter 154. The first filter formed by the inductor Lf and the capacitor Cf1 is connected to the output of the inverter 154. The second filter formed by the capacitor Cf2 and the inductor Lg is connected to the output of the first filter through the breaker S1. As shown in Figure 2, the breaker S1 is connected between a common node of the inductor Lf and the capacitor Cf1, and a common node of the capacitor Cf2 and the inductor Lg. The output of the second filter is connected to the power grid.

In some embodiments, the first and second DC/DC converters 114 and 124 shown in Figure 2 are implemented as buck-boost converters. However, other suitable converter topologies may also be used depending on system requirements, including but not limited to boost converters, interleaved boost converters, or stacked dual-boost converters. Likewise, the inverter 154 may be implemented as either a single-phase inverter or a three-phase inverter, or any other inverter configuration appropriate for the intended grid connection and power rating.

In operation, the first DC/DC converter 114 is controlled to perform maximum power point tracking, while the second DC/DC converter 124 operates as a power reservoir that regulates the voltage on the DC voltage bus and provides reserve power when required. When the inverter 154 is configured to operate in the GFM mode, the second DC/DC converter 124 is configured to control an output voltage of the second solar panel string 122 to be greater than a maximum power point voltage of the first solar panel string 112, and in an inertia response operation within the GFM mode of the string inverter power system, the second DC/DC converter 124 configures the second solar panel string 122 to provide additional power through reducing the output voltage of the second solar panel string 122 until the output voltage of the second solar panel string 122 reaches its maximum power point voltage.

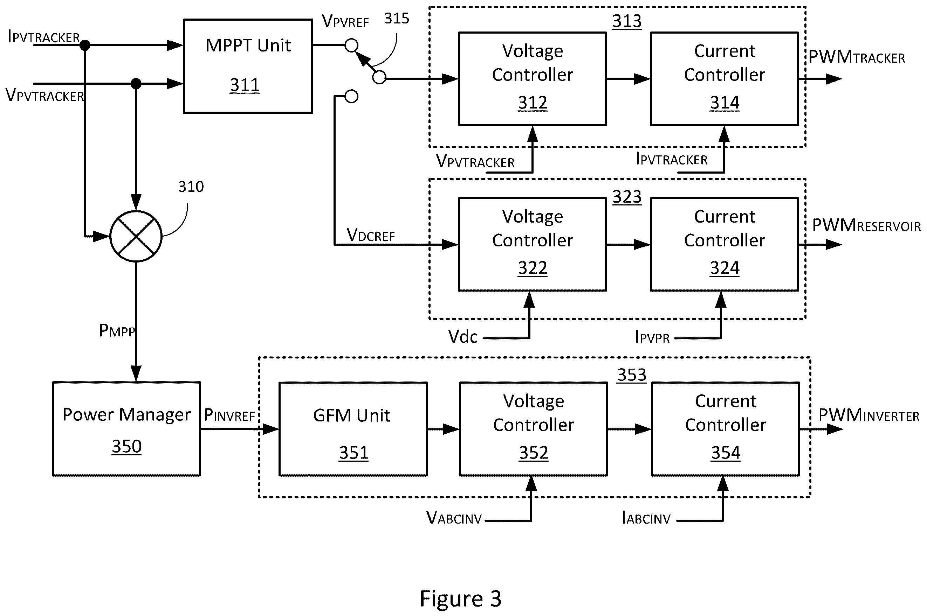

Figure 3 illustrates a control block diagram of the string inverter power system shown in Figure 2 operating in the GFM mode in accordance with various embodiments of the present disclosure. The control circuit includes a MPPT unit 311, a power manager 350, a MPPT PWM generator 313 including a voltage controller 312 and a current controller 314, a power reservoir PWM generator 323 including a voltage controller 322 and a current controller 324, and an inverter PWM generator 353 including a GFM unit 351, a voltage controller 352 and a current controller 354.

Referring back to Figure 2, the MPPT PWM generator 313 is configured to generate a PWM signal PWM$_{TRACKER}$ for controlling the operation of the first DC/DC converter 114. The power reservoir PWM generator 323 is configured to generate a PWM signal PWM$_{RESERVOIR}$ for controlling the operation of the second DC/DC converter 124. The inverter PWM generator 353 is configured to generate a PWM signal PWM$_{INVERTER}$ for controlling the operation of the inverter 154.

As shown in Figure 3, the MPPT unit 311 is configured to receive a measured current I$_{PVTRACKER}$ of the first solar panel string 112 and a measured voltage V$_{PVTRACKER}$ at the output of the first solar panel string 112. The MPPT unit 311 uses both measured values to evaluate the instantaneous operating point on the I-V and P-V curves of the first solar panel string 112. From these measurements, the well-known MPPT algorithm (e.g., Perturb and Observe algorithm and Incremental Conductance algorithm) calculates the reference panel voltage V$_{PVREF}$ at the maximum power point.

When the inverter 154 operates in the GFM mode, and the first DC/DC converter 114 and the associated first solar panel string 112 are configured as a MPP tracker, the double-pole single throw switch 315 is switched from the lower position to the upper position. The reference panel voltage V$_{PVREF}$ is fed into the MPPT PWM generator 313.

The MPPT PWM generator 313 has two loops, namely an external voltage loop and an internal current loop. The voltage controller 312 represents the external voltage loop of the MPPT PWM generator 313. The current controller 314 represents the internal current loop of the MPPT PWM generator 313. Both the external voltage loop and the internal current loop are well-known in the art, and hence are not discussed herein.

In operation, the reference panel voltage V$_{PVREF}$ is compared to the measured voltage V$_{PVTRACKER}$ in the voltage controller 312 to determine a current reference fed into the current controller 314. The current reference is compared to the measured current I$_{PVTRACKER}$ in the current controller 314 to determine the PWM signal PWM$_{TRACKER}$ for controlling the operation of the first DC/DC converter 114.

The power reservoir PWM generator 323 has two loops, namely an external voltage loop and an internal current loop. The voltage controller 322 represents the external voltage loop of the power reservoir PWM generator 323. The current controller 324 represents the internal current loop of the power reservoir PWM generator 323. Both the external voltage loop and the internal current loop are well-known in the art, and hence are not discussed herein.

As shown in Figure 3, a predetermined reference V$_{DCREF}$ is fed into the power reservoir PWM generator 323. In some embodiments, the predetermined reference V$_{DCREF}$ is a reference value for the voltage on the DC voltage bus and is generated by a DC voltage bus controller (not shown). The predetermined reference V$_{DCREF}$ is determined by the desired AC output voltage of the inverter 154. The predetermined reference V$_{DCREF}$ is greater than $\sqrt{2}\times V_O$ and may be selected with additional design margin to accommodate modulation index limitations. Vo is the RMS value of the AC output voltage.

In operation, the predetermined reference $V_{DCREF}$ is compared to Vdc in the voltage controller 322 to determine a current reference fed into the current controller 324. The current reference is compared to a measured current $I_{PVPR}$ of the second solar panel string 122 in the current controller 324 to determine the PWM signal $PWM_{RESERVOIR}$ for controlling the operation of the second DC/DC converter 124.

As shown in Figure 3, the measured voltage $V_{PVTRACKER}$ and the measured current $I_{PVTRACKER}$ are fed into the multiplication unit 310 where the maximum power $P_{MPP}$ from the MPP tracker 101 is generated. The power manager 350 is configured to receive the maximum power $P_{MPP}$. Based on different operating modes, the power manager 350 generates different power setpoints for the inverter 154. In particular, when the inverter 154 is configured to operate in the GFM mode, the power setpoint $P_{INVREF}$ is equal to $N \times P_{MPP}$ minus the predetermined power reserve $\Delta P$. On the other hand, when the inverter 154 is configured to operate in the GFL mode, the power setpoint $P_{INVREF}$ is equal to the power demanded by the power grid or limited by the total maximum available power $N \times P_{MPP}$.

The inverter PWM generator 353 includes the GFM unit 351, the voltage controller 352 and the current controller 354. The inverter PWM generator 353 is configured to receive the power setpoint $P_{INVREF}$ and generate the PWM signal $PWM_{INVERTER}$ for controlling the operation of the inverter 154.

The GFM unit 351 implements a grid-forming control scheme that incorporates virtual inertia and damping parameters, denoted as *J* and *D*, respectively. In this arrangement, *J* represents a virtual inertia component that emulates the inertial behavior of a synchronous generator, enabling the inverter 154 to limit the rate of change of frequency and provide stabilizing support during grid disturbances. The parameter D represents a damping coefficient that produces a damping torque effect, which suppresses oscillations and enhances system stability following faults or abrupt changes in operating conditions. In typical implementations, such as droop control or virtual synchronous generator (VSG) control, the GFM unit 351 uses the *J* and *D* parameters within its power loop to emulate the dynamic response of a synchronous generator and to generate corresponding reference voltage and frequency signals for the inverter 154. By establishing these reference signals, the GFM unit 351 allows the inverter 154 to synthesize grid-supportive characteristics, maintain stable voltage and frequency, and contribute to overall grid resilience in renewable-rich power systems.

The inverter PWM generator 353 has two loops, namely an external voltage loop and an internal current loop. The voltage controller 352 represents the external voltage loop of the inverter PWM generator 353. The current controller 354 represents the internal current loop of the inverter PWM generator 353. Both the external voltage loop and the internal current loop are well-known in the art, and hence are not discussed herein.

In operation, the reference voltage signal generated by the GFM unit 351 is compared to $V_{ABCINV}$ in the voltage controller 352 to determine a current reference fed into the current controller 354. In some embodiments, $V_{ABCINV}$ is the output voltage of the inverter 154. The current reference generated by the voltage controller 352 is compared to a measured current $I_{ABCINV}$ of the inverter 154 in the current controller 354 to determine PWM signal $PWM_{INVERTER}$ for controlling the operation of the inverter 154. In some embodiments, $I_{ABCINV}$ is the current flowing through the output of the inverter 154.

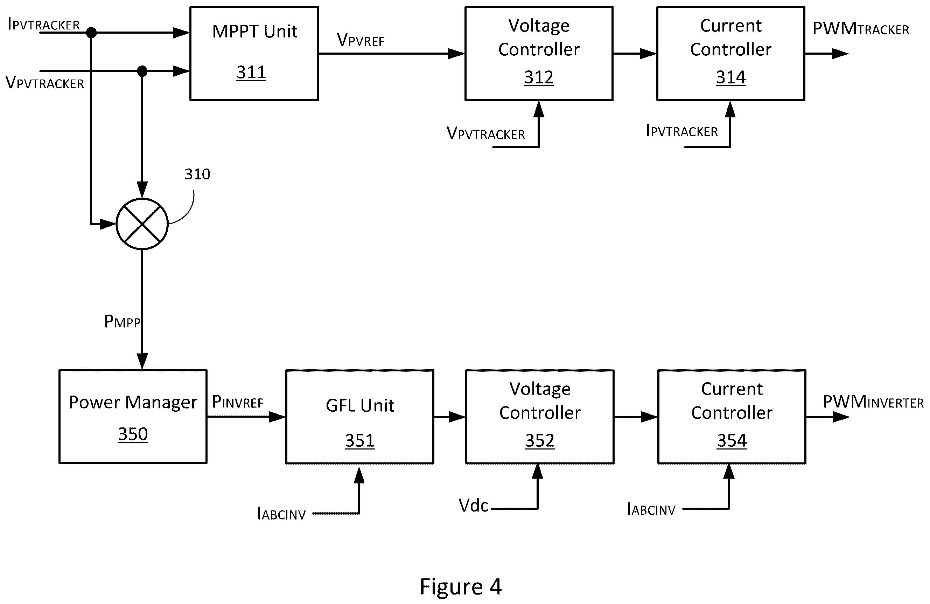

Figure 4 illustrates a control block diagram of the string inverter power system shown in Figure 2 operating in the GFL mode in accordance with various embodiments of the present disclosure. The control block diagram of the traditional GFL control scheme is well-known in the art. However, the control block diagram is used in the present disclosure as one of the operating modes of the string inverter power system. In this GFL mode, the inverter 154 functions as a current source that synchronizes to the grid voltage through a phase-locked loop (PLL) and injects active and reactive currents according to commanded setpoints. In operation, when the available power reserve $\Delta P$ is not sufficient to support grid-forming operation, the inverter 154 transitions from the GFM mode to the well-known GFL operating mode so that the inverter 154 can regulate the voltage on the DC voltage bus and follow the grid voltage waveform. In this configuration, the inverter 154 no longer establishes its own voltage or frequency. Instead, the inverter 154 tracks the grid voltage and delivers the maximum power that can be provided collectively by all of the solar panel strings.

As shown in Figure 4, the GFL control scheme regulates the voltage on the DC voltage bus Vdc by adjusting the inverter's current injection, ensuring that the inverter 154 remains synchronized to the grid while safely delivering the maximum available solar-generated power under conditions in which grid-forming support cannot be maintained.

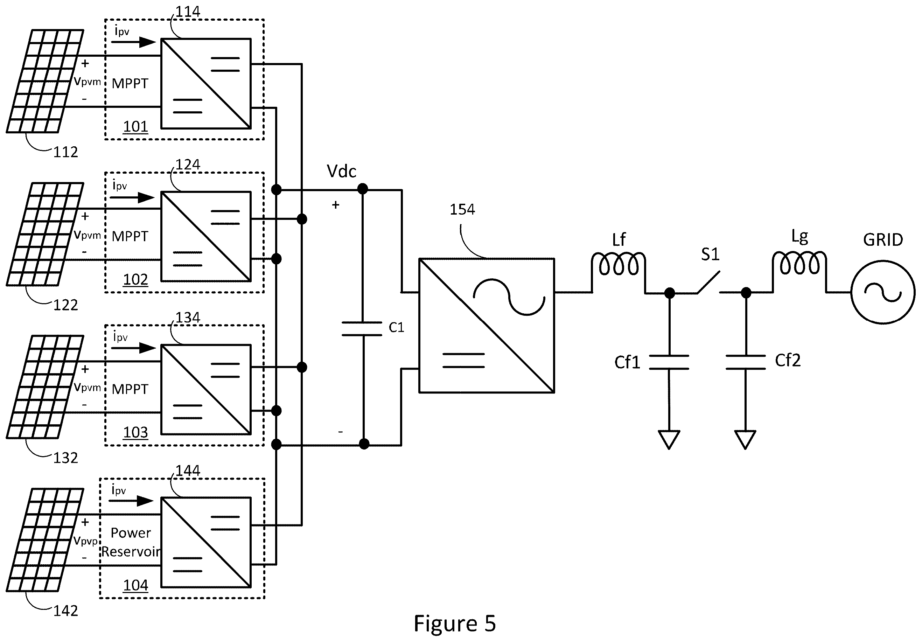

Figure 5 illustrates a schematic diagram of a second implementation of the string inverter power system shown in Figure 1 in accordance with various embodiments of the present disclosure. The string inverter power system in Figure 5 is similar to that shown in Figure 2 except that there are M MPP trackers and (N-M) power reservoirs. Both M and N are positive integers. N is greater than M. For clarity in illustrating the innovative aspects of the present disclosure, Figure 5 depicts an embodiment having three of the M MPP trackers and one of the (N-M) power reservoirs. A person of ordinary skill in the art would recognize that the operating principles described herein apply equally to systems having any suitable number of MPP trackers and power reservoirs.

As shown in Figure 5, a MPP tracker 101 includes a first DC/DC converter 114 and the associated control circuits (not shown). The first DC/DC converter 114 is coupled between a first solar panel string 112 and the DC voltage bus Vdc. The first solar panel string 112 provides power to the first DC/DC converter 114, which is configured to operate under the MPPT control scheme.

A MPP tracker 102 includes a second DC/DC converter 124 and the associated control circuits (not shown). The second DC/DC converter 124 is coupled between a second solar panel string 122 and the DC voltage bus Vdc. The second solar panel string 122 provides power to the second DC/DC converter 124, which is configured to operate under the MPPT control scheme.

A MPP tracker 103 includes a third DC/DC converter 134 and the associated control circuits (not shown). The third DC/DC converter 134 is coupled between a third solar panel string 132 and the DC voltage bus Vdc. The third solar panel string 132 provides power to the third DC/DC converter 134, which is configured to operate under the MPPT control scheme.

A power reservoir 104 includes a fourth DC/DC converter 144 and the associated control circuits (not shown). The fourth DC/DC converter 144 is coupled between a fourth solar panel string 142 and the DC voltage bus Vdc. The fourth solar panel string 142 provides power to the fourth DC/DC converter 144, and the fourth DC/DC converter 144 is configured to regulate the voltage on the DC voltage bus Vdc.

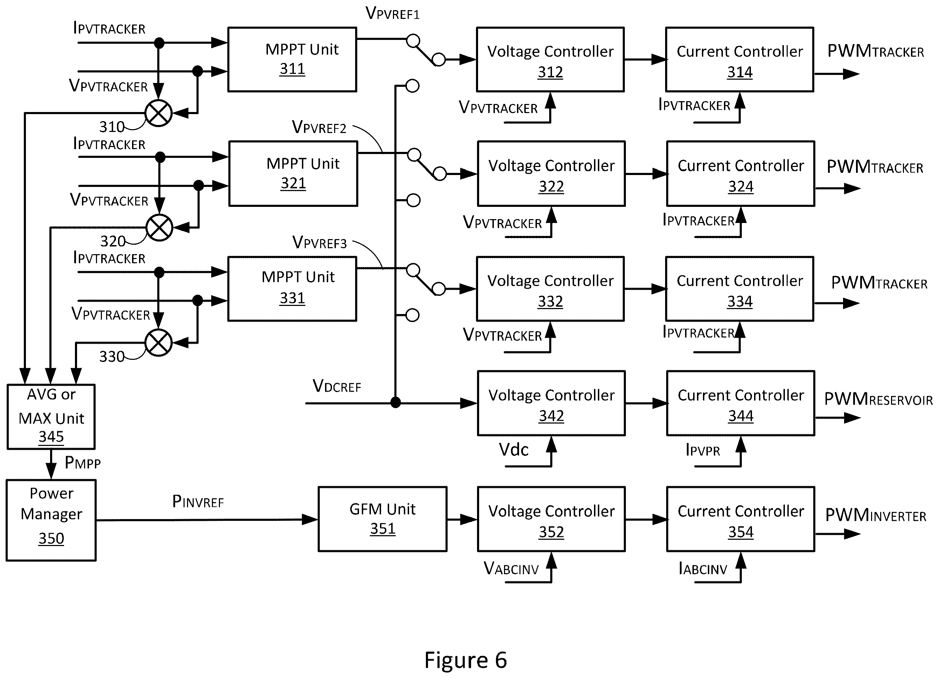

Figure 6 illustrates a control block diagram of the string inverter power system shown in Figure 5 in accordance with various embodiments of the present disclosure. The control implementation shown in Figure 6 is similar to the arrangement shown in Figure 3 except that two additional MPPT units are included. In the embodiment of Figure 6, an MPPT unit 311 generates a reference panel voltage $V_{PVREF1}$ for the first solar panel string 112. The PWM signal for the first DC/DC converter 114 is generated based on the reference panel voltage $V_{PVREF1}$. An MPPT unit 321 generates a reference panel voltage $V_{PVREF2}$ for the second solar panel string 122. The PWM signal for the second DC/DC converter 124 is generated based on the reference panel voltage $V_{PVREF2}$. An MPPT unit 331 generates a reference panel voltage $V_{PVREF3}$ for the third solar panel string 132. The PWM signal for the third DC/DC converter 134 is generated based on the reference panel voltage $V_{PVREF3}$. Thus, with three MPP trackers 101, 102, 103 in the string inverter power system, three MPPT units 311, 321, 331 are provided. Each MPPT PWM generator has a corresponding voltage control loop and current control loop that operate in the same manner as the PWM control loop described previously for Figure 3.

In some embodiments, when multiple MPPT units are available as shown in Figure 6, the string inverter power system may dynamically rotate the role of the MPP tracker among the DC/DC converters. For example, the controller may select M DC/DC converters from the plurality of converters coupled to the solar panel strings and operate one or more of the selected converters as active MPP trackers by executing an MPPT control scheme on those converters. The designation of the active MPP tracker may be periodically rotated among the M converters based on variations in solar irradiation, shading patterns, or other operating conditions of the corresponding solar panel strings. This rotational assignment allows the string inverter power system to more accurately identify the maximum available power from different strings over time and enhances overall power estimation and reserve allocation under nonuniform environmental conditions.

As shown in Figure 6, the power outputs obtained from the three MPPT units are supplied to an average or maximum unit 345, which, depending on design needs, generates either an average value or a maximum value of the three MPPT outputs. The resulting value $P_{MPP}$ is then provided to the power manager 350, which determines the inverter power setpoint $P_{INVREF}$ and operates the inverter PWM generator in a manner similar to that shown in Figure 3. This multiple tracker configuration shown in Figure 6 enables improved estimation of the available solar power when multiple solar panel strings are used under varying environmental conditions.

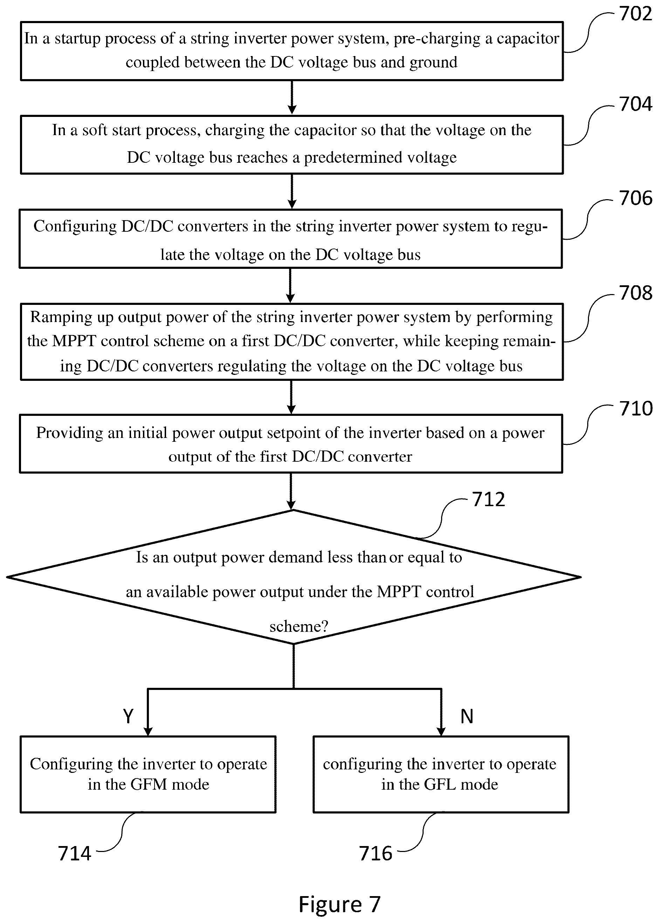

Figure 7 illustrates a flow chart of a control method for starting up the string inverter power system shown in Figure 1 in accordance with various embodiments of the present disclosure. This flowchart shown in Figure 7 is merely an example, which should not unduly limit the scope of the claims. One of ordinary skill in the art would recognize many variations, alternatives, and modifications. For example, various steps illustrated in Figure 7 may be added, removed, replaced, rearranged and repeated.

At step 702, a startup process of a string inverter power system begins by pre-charging a capacitor coupled between the DC voltage bus and ground.

At step 704, in a soft start process, the capacitor is further charged so that the voltage on the DC voltage bus reaches a predetermined voltage.

At step 706, the DC/DC converters in the string inverter power system are configured to regulate the voltage on the DC voltage bus. The inverter then begins its startup sequence by entering a pre-synchronization mode in which the voltage across the output filter capacitor of the inverter is aligned with the grid voltage. After synchronization is achieved, the inverter transitions into the GFM mode by closing the breaker.

At step 708, the output power of the string inverter power system is ramped up by performing the MPPT control scheme on a first DC/DC converter, while keeping remaining DC/DC converters regulating the voltage on the DC voltage bus.

At step 710, an initial power output setpoint of the inverter is provided based on a power output of the first DC/DC converter.

At step 712, a determination is made as to whether the output power demand is less than or equal to the available power estimated under the MPPT control scheme. If the condition is satisfied, the method proceeds to step 714; otherwise, the method proceeds to step 716.

At step 714, the inverter is configured to operate in the GFM mode.

At step 716, the inverter is configured to operate in the GFL mode.

In normal operation, the inverter is configured to operate in the GFM mode. When the grid experiences a sudden loss of generation or a large load increase, the grid frequency may drop rapidly. In response to such a load transient, the synthetic inertia function of the GFM control causes the inverter to release additional active power by driving the operating voltages of the power-reservoir solar panels from higher voltages (e.g., their open circuit levels) toward their respective MPP voltages. As the system frequency begins to settle, the inverter's droop control function adjusts the active power and reactive power setpoints to continue supporting grid recovery.

The droop control method is a decentralized strategy that emulates the natural behavior of synchronous generators by introducing an inverse linear relationship between frequency and active power (when the inverter outputs more active power, the frequency decreases slightly) and between voltage and reactive power (when the inverter outputs more reactive power, the voltage decreases slightly). Under this scheme, the frequency of the inverter decreases slightly as it delivers more active power, and its terminal voltage decreases slightly as it delivers more reactive power, enabling the inverter to self-adjust and share power stably with other distributed resources without communication. Once the grid reaches a new steady state frequency, both the output power of the inverter and the operating voltages of the power-reservoir solar panels settle at corresponding steady state values determined by the droop control settings.

While the GFM mode can maintain stable operation under typical disturbances, there are conditions in which the available power reserve becomes inadequate for sustaining grid-forming control. In such cases, if the grid frequency deviates beyond an acceptable range or changing weather conditions reduce the available power such that the power reserve is insufficient to sustain grid-forming functionality, the inverter transitions from the GFM mode to the GFL mode. In the GFL mode, the inverter regulates the DC voltage and follows the grid voltage waveform, delivering the maximum power available from the solar panel strings in accordance with the traditional GFL control scheme.

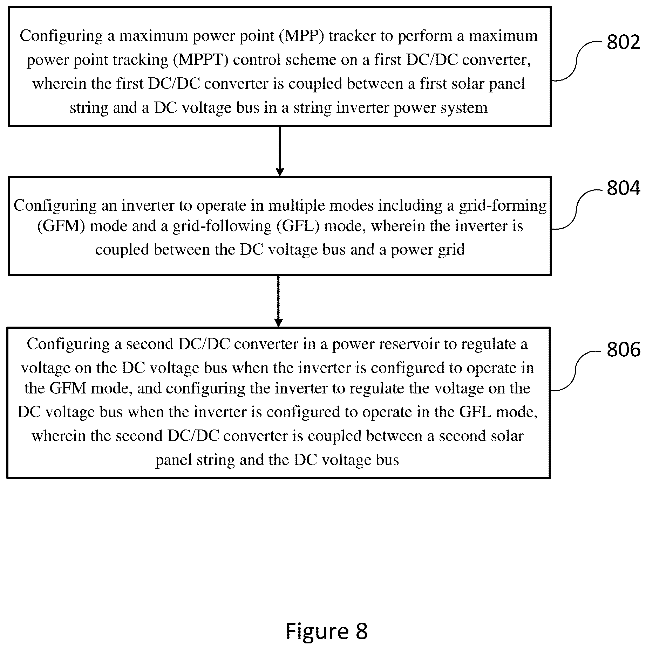

Figure 8 illustrates a flow chart of a control method for operating the string inverter power system shown in Figure 1 in accordance with various embodiments of the present disclosure. This flowchart shown in Figure 8 is merely an example, which should not unduly limit the scope of the claims. One of ordinary skill in the art would recognize many variations, alternatives, and modifications. For example, various steps illustrated in Figure 8 may be added, removed, replaced, rearranged and repeated.

At step 802, a maximum power point (MPP) tracker is configured to perform a maximum power point tracking (MPPT) control scheme on a first DC/DC converter, wherein the first DC/DC converter is coupled between a first solar panel string and a DC voltage bus in a string inverter power system.

At step 804, an inverter is configured to operate in multiple modes including a grid-forming (GFM) mode and a grid-following (GFL) mode, wherein the inverter is coupled between the DC voltage bus and a power grid.

At step 806, a second DC/DC converter in a power reservoir is configured to regulate a voltage on the DC voltage bus when the inverter is configured to operate in the GFM mode, and configuring the inverter to regulate the voltage on the DC voltage bus when the inverter is configured to operate in the GFL mode, wherein the second DC/DC converter is coupled between a second solar panel string and the DC voltage bus.

The method further includes in a startup process of the string inverter power system, pre-charging a capacitor coupled between the DC voltage bus and ground, in a soft start process, charging the capacitor so that the voltage on the DC voltage bus reaches a predetermined voltage, configuring DC/DC converters in the string inverter power system to regulate the voltage on the DC voltage bus, ramping up output power of the string inverter power system by performing the MPPT control scheme on the first DC/DC converter, while keeping remaining DC/DC converters regulating the voltage on the DC voltage bus, and providing an initial power output setpoint of the inverter based on a power output of the first DC/DC converter.

The method further includes configuring the inverter to enter the GFM mode after completion of the startup process, and providing an operating power output setpoint of the inverter based on the power output of the first DC/DC converter and a power reserve.

The method further includes configuring the inverter to operate in the GFM mode when an output power demand of the string inverter power system is less than or equal to an available power output that the string inverter power system is able to provide under the MPPT control scheme, and configuring the inverter to operate in the GFL mode when an output power demand of the string inverter power system is greater than the available power output that the string inverter power system is able to provide under the MPPT control scheme.

The method further includes in the GFM mode, operating the inverter as a voltage source to maintain a voltage and a frequency of an AC grid through releasing additional power to the AC grid, and in the GFL mode, operating the inverter as a current source injecting power to the AC grid.

The method further includes selecting M DC/DC converters from a plurality of DC/DC converters coupled between corresponding solar panel strings and the DC voltage bus, operating at least one of the M DC/DC converters as the MPP tracker by performing the MPPT control scheme on the at least one of the M DC/DC converters, and periodically rotating the role of the MPP tracker among the M DC/DC converters based on variations in solar irradiation or operating conditions of the solar panel strings.

The method further includes in the GFM mode, operating the inverter to provide inertial, damping, and primary frequency response functions.

The method further includes in the GFM mode, controlling the second DC/DC converter to set an output voltage of the second solar panel string to be greater than a maximum power point voltage of the first solar panel string, and in an inertia response operation within the GFM mode of the string inverter power system, controlling the second DC/DC converter to configure the second solar panel string to provide additional power through reducing the output voltage of the second solar panel string until the output voltage reaches the maximum power point voltage of the second solar panel string.

**Claims**

1. A system, **characterized by** comprising:

   a maximum power point (MPP) tracker (101) coupled between a first solar panel string (112) and a DC voltage bus (Vdc), wherein the MPP tracker (101) comprises a first DC/DC converter (114) and is configured to perform a maximum power point tracking (MPPT) control scheme on the first DC/DC converter (114);
   a power reservoir (102) coupled between a second solar panel string (122) and the DC voltage bus (Vdc), wherein the power reservoir (102) comprises a second DC/DC converter (124); and
   an inverter (154) coupled between the DC voltage bus (Vdc) and a power grid, wherein the inverter (154) is configured to operate in multiple modes including a grid-forming (GFM) mode and a grid-following (GFL) mode, and wherein in the GFM mode, the second DC/DC converter (124) is configured to regulate a voltage on the DC voltage bus (Vdc).

2. The system according to claim 1, wherein:

   in the GFM mode, the inverter (154) is configured to provide inertial, damping and primary frequency response functions; and
   wherein the inverter (154) is configured to regulate the voltage on the DC voltage bus (Vdc) when the inverter (154) is configured to operate in the GFL mode.

3. The system according to claim 1 or 2, further comprising:

   a plurality of MPP DC/DC converters (114), wherein each of the plurality of MPP DC/DC converters (114) is in a corresponding MPP tracker (101) coupled between at least one solar panel string (112) and the DC voltage bus (Vdc); and
   a plurality of power reservoir DC/DC converters (124), wherein each of the plurality of power reservoir DC/DC converters (124) is coupled between at least one solar panel string (122) and the DC voltage bus (Vdc).

4. The system according to any one of preceding claims 1 to 3, wherein:

   the inverter (154) is configured to operate in the GFM mode when an output power demand of the system is less than or equal to an available power output that the system is able to provide under the MPPT control scheme; and
   the inverter (154) is configured to operate in the GFL mode when the output power demand of the system is greater than the available power output that the system is able to provide under the MPPT control scheme;
   wherein in the GFM mode, the inverter (154) is configured as a voltage source that maintains a voltage and a frequency of a power grid through releasing additional power to the power grid; and
   in the GFL mode, the inverter (154) is configured as a current source that injects power into the power grid.

5. The system according to any one of preceding claims 1 to 4, wherein:

   in the GFM mode, the second DC/DC converter (124) is configured to control an output voltage of the second solar panel string (122) to be greater than a maximum power point voltage of the first solar panel string (112), and in an inertia response operation within the GFM mode of the system, the second DC/DC converter (124) configures the second solar panel string (122) to provide additional power through reducing the output voltage of the second solar panel string (122) until the output voltage of the second solar panel string (122) reaches the maximum power point voltage of the second solar panel string (122);
   wherein the first DC/DC converter (114) is a first buck-boost converter; and the second DC/DC converter (124) is a second buck-boost converter.

6. A method, **characterized by** comprising:

configuring a maximum power point (MPP) tracker (101) to perform a maximum power point tracking (MPPT) control scheme on a first DC/DC converter (114), wherein the first DC/DC converter (114) is coupled between a first solar panel string (112) and a DC voltage bus (Vdc) in a string inverter power system;

configuring an inverter (154) to operate in multiple modes including a grid-forming (GFM) mode and a grid-following (GFL) mode, wherein the inverter (154) is coupled between the DC voltage bus (Vdc) and a power grid; and

configuring a second DC/DC converter (124) in a power reservoir (102) to regulate a voltage on the DC voltage bus (Vdc) when the inverter (154) is configured to operate in the GFM mode, and configuring the inverter (154) to regulate the voltage on the DC voltage bus (Vdc) when the inverter (154) is configured to operate in the GFL mode, wherein the second DC/DC converter (124) is coupled between a second solar panel string (122) and the DC voltage bus (Vdc).

7. The method according to claim 6, further comprising:

in a startup process of the string inverter power system, pre-charging a capacitor (C1) coupled between the DC voltage bus (Vdc) and ground;

in a soft start process, charging the capacitor (C1) so that the voltage on the DC voltage bus (Vdc) reaches a predetermined voltage;

configuring DC/DC converters (134) in the string inverter power system to regulate the voltage on the DC voltage bus (Vdc);

ramping up output power of the string inverter power system by performing the MPPT control scheme on the first DC/DC converter (114), while keeping remaining DC/DC converters (134) regulating the voltage on the DC voltage bus (Vdc);

providing an initial power output setpoint of the inverter (154) based on a power output of the first DC/DC converter (114);

configuring the inverter (154) to enter the GFM mode after completion of the startup process; and

providing an operating power output setpoint of the inverter (154) based on the power output of the first DC/DC converter (114) and a power reserve.

8. The method according to claim 6 or 7, further comprising:

configuring the inverter (154) to operate in the GFM mode when an output power demand of the string inverter power system is less than or equal to an available power output that the string inverter power system is able to provide under the MPPT control scheme; and

configuring the inverter (154) to operate in the GFL mode when the output power demand of the string inverter power system is greater than the available power output that the string inverter power system is able to provide under the MPPT control scheme.

9. The method according to any one of preceding claims 6 to 8, further comprising:

in the GFM mode, operating the inverter (154) as a voltage source to maintain a voltage and a frequency of an AC grid through releasing additional power to the AC grid; and

in the GFL mode, operating the inverter (154) as a current source injecting power to the AC grid.

10. The method according to any one of preceding claims 6 to 9, further comprising:

selecting M DC/DC converters (114, 134) from a plurality of DC/DC converters (114, 134) coupled between corresponding solar panel strings (112, 132) and the DC voltage bus (Vdc);

operating at least one of the M DC/DC converters (114, 134) as the MPP tracker (101, 103) by performing the MPPT control scheme on the at least one of the M DC/DC converters (114, 134); and

periodically rotating the role of the MPP tracker (101, 103) among the M DC/DC converters (114, 134) based on variations in solar irradiation or operating conditions of the solar panel strings (112, 132).

11. The method according to any one of preceding claims 6 to 9, further comprising:

in the GFM mode, operating the inverter (154) to provide inertial, damping, and primary frequency response functions;

in the GFM mode, controlling the second DC/DC converter (124) to set an output voltage of the second solar panel string (122) to be greater than a maximum power point voltage of the first solar panel string (112); and

in an inertia response operation within the GFM mode of the string inverter power system, controlling the second DC/DC converter (124) to configure the second solar panel string (122) to provide additional power through reducing the output voltage of the second solar panel string (122) until the output voltage reaches the maximum power point voltage of the second solar panel string (122).

12. A system, **characterized by** comprising:

N DC/DC converters (114, 124, 134, 144) respectively coupled between N solar panel strings (112, 122, 132, 142) and a DC voltage bus (Vdc);
an inverter (154) coupled between the DC voltage bus (Vdc) and a power grid, the inverter (154) being configured to operate in multiple modes including a grid-forming (GFM) mode and a grid-following (GFL) mode; and
a control circuit configured to:

designate one of the N DC/DC converters (114, 124, 134, 144) as a maximum power point (MPP) tracker (101, 102, 103) and operate the designated DC/DC converter (114, 124, 134) according to a maximum power point tracking (MPPT) control scheme; and
operate the remaining ones of the N DC/DC converters (144) as power reservoir converters (104), wherein in the GFM mode, the power reservoir converters (104) are configured to regulate a voltage on the DC voltage bus (Vdc).

13. The system according to claim 12, wherein:
the control circuit is further configured to periodically rotate the designation of the MPP tracker (101, 102, 103) among the N DC/DC converters (114, 124, 134) based on variations in solar irradiation or operating conditions of the solar panel strings (112, 122, 132).

14. The system according to claim 12 or 13, wherein:
the control circuit is further configured to designate M DC/DC converters (114, 124, 134) to operate as MPP trackers (101, 102, 103) by performing respective MPPT control schemes, and to operate the remaining DC/DC converters (144) as power reservoir converters (104), wherein M is greater than 1, and M is less than N.

15. The system according to any one of preceding claims 12 to 14, wherein:

during a ramp up period in which the designated MPP tracker (101, 102, 103) increases output power under the MPPT control scheme, no power reserve is provided by the remaining DC/DC converters (101, 102, 103); and
after completion of the ramp up period, the power reservoir converters (104) regulate the DC voltage bus (Vdc) in the GFM mode based on a power reserve available from the corresponding solar panel strings (142).

Figure 1

Figure 2

EP 4 769 868 A1

Figure 3

Figure 4

Figure 5

Figure 6

In a startup process of a string inverter power system, pre-charging a capacitor coupled between the DC voltage bus and ground — 702

In a soft start process, charging the capacitor so that the voltage on the DC voltage bus reaches a predetermined voltage — 704

Configuring DC/DC converters in the string inverter power system to regulate the voltage on the DC voltage bus — 706

Ramping up output power of the string inverter power system by performing the MPPT control scheme on a first DC/DC converter, while keeping remaining DC/DC converters regulating the voltage on the DC voltage bus — 708

Providing an initial power output setpoint of the inverter based on a power output of the first DC/DC converter — 710

Is an output power demand less than or equal to an available power output under the MPPT control scheme? — 712

Y

Configuring the inverter to operate in the GFM mode

714

N

configuring the inverter to operate in the GFL mode

716

Figure 7

Configuring a maximum power point (MPP) tracker to perform a maximum power point tracking (MPPT) control scheme on a first DC/DC converter, wherein the first DC/DC converter is coupled between a first solar panel string and a DC voltage bus in a string inverter power system — 802

Configuring an inverter to operate in multiple modes including a grid-forming (GFM) mode and a grid-following (GFL) mode, wherein the inverter is coupled between the DC voltage bus and a power grid — 804

Configuring a second DC/DC converter in a power reservoir to regulate a voltage on the DC voltage bus when the inverter is configured to operate in the GFM mode, and configuring the inverter to regulate the voltage on the DC voltage bus when the inverter is configured to operate in the GFL mode, wherein the second DC/DC converter is coupled between a second solar panel string and the DC voltage bus — 806

Figure 8

Europäisches
Patentamt

European
Patent Office

Office européen
des brevets

## EUROPEAN SEARCH REPORT

**Application Number**

EP 25 22 5687

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 119 209 715 A (TBEA TECH INVESTMENT CO LTD) 27 December 2024 (2024-12-27) | 1-3,5,6, 9,11,12, 14 | INV. H02J3/38 H02J1/102 |
| A | * paragraphs [0057], [0066], [0067], [0083], [0097]; figures 3, 5 * | 4,7,8, 10,13,15 | H02J3/11 H02J3/12 |
|  | ----- | | |

TECHNICAL FIELDS SEARCHED (IPC)

H02J

The present search report has been drawn up for all claims

| Place of search | Date of completion of the search | Examiner |
|---|---|---|
| Munich | 24 April 2026 | Sulic, Tomislav |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 5687

This annex lists the patent family members relating to the patent documents cited in  the above-mentioned European search report.
The members are as contained in the European Patent Office EDP file on
The European Patent Office is in no way liable for these particulars which are merely given for the purpose of information.

24-04-2026

| Patent document cited in search report | Publication date | Patent family member(s) | Publication date |
|---|---|---|---|
| CN 119209715    A | 27-12-2024 | NONE | |

For more details about this annex : see Official Journal of the European Patent Office, No. 12/82